Europäisches Patentamt

European Patent Office

Office européen des brevets

(19)

(11) **EP 0 610 635 B1**

(12) **FASCICULE DE BREVET EUROPEEN**

(45) Date de publication et mention
de la délivrance du brevet:
**21.10.1998 Bulletin 1998/43**

(51) Int Cl.6: **H04N 5/217**, H04N 3/09,
G02B 13/14

(21) Numéro de dépôt: **93402823.4**

(22) Date de dépôt: **19.11.1993**

(54) **Dispositif optique de calibration pour caméra thermique**

Optische Anordnung zur Kalibrierung einer Wärmebildkamera

Optical device for calibrating a thermal camera

(84) Etats contractants désignés:
**DE FR GB IT NL SE**

(30) Priorité: **27.11.1992 FR 9214307**

(43) Date de publication de la demande:
**17.08.1994 Bulletin 1994/33**

(73) Titulaire: **THOMSON-CSF**
**75008 Paris (FR)**

(72) Inventeurs:
- **Rollin, Joel**
  **F-92402 Courbevoie Cedex (FR)**
- **Rabault, Denis**
  **F-92402 Courbevoie Cedex (FR)**

(74) Mandataire: **Lincot, Georges et al**
**Thomson-CSF Propriété Intellectuelle,**
**13, Avenue du Président Salvador Allende**
**94117 Arcueil Cédex (FR)**

(56) Documents cités:
**EP-A- 0 185 592**          **EP-A- 0 465 060**
**EP-A- 0 468 474**          **EP-A- 0 549 446**
**FR-A- 2 673 794**

- **PATENT ABSTRACTS OF JAPAN vol. 16, no. 101**
  **(E-1177) 12 Mars 1992 & JP-A-03 278 680 (TECH.**
  **RES.& DEV. INST. OF JAPAN DEF. AGENCY) 10**
  **Décembre 1991**

## Description

L'invention se rapporte au domaine de la correction des défauts d'images formées par des systèmes d'imagerie et, plus particulièrement aux défauts résultant de l'utilisation, dans une caméra thermique, d'un détecteur comportant des capteurs élémentaires multiples.

L'invention s'applique plus spécifiquement aux caméras thermiques grand champ embarqués à bord d'aéronefs pour participer à des systèmes de pilotage ou de reconnaissance air-sol, et a pour objet un dispositif optique de calibration pour de telles caméras thermiques.

Les caméras thermiques utilisent des détecteurs à capteurs élémentaires multiples constituant une mosaïque organisée en barrette ou en matrice, associée dans le cas d'une barrette à un système de balayage opto-mécanique, pour délivrer un signal vidéo représentatif de la scène observée. On peut citer par exemple la matrice détectrice Pt-Si de 512 x 512 capteurs bien connue de L'hommme du métier. Dans les systèmes d'imagerie infrarouge, le signal vidéo est formé par transfert et multiplexage des charges libérées par les capteurs, en fonction de l'éclairement reçu par chaque capteur, à l'aide de dispositifs électroniques connus du type à couplage ou à transfert de charges. La quantité de charges transférée est également fonction du temps d'intégration des charges. En imagerie infrarouge, le détecteur et le dispositif à transfert de charges sont disposés dans une enceinte cryostatique refroidie par des systèmes fonctionnant sur le principe Joule-Thomson ou Stirling selon des techniques connues.

En règle générale une image, dans les conditions d'utilisation envisagées, comporte une scène sur un fond uniforme et le signal vidéo comporte alors une composante continue fonction de la luminance et de l'émissivité du fond. Cette luminance est elle-même fonction de la température du fond, lorsqu'il s'agit d'images infrarouges.

Or cette composante continue a une valeur relative importante par rapport à la composante variable représentant une scène. Par exemple, dans les bandes spectrales s'étendant de 3 à 5 microns ou de 8 à 12 microns, un écart de température égal un degré de la scène par rapport au fond, se traduit typiquement par une variation de 1 % du signal vidéo par rapport à la composante continue.

Les systèmes d'imagerie utilisant des mosaïques, et plus particulièrement les systèmes d'imagerie infrarouges, sont alors soumis aux contraintes suivantes :

- d'une part, le contraste des objets est très faible : pour un intervalle de température de 1°C, il est de l'ordre du pour cent, alors que l'on s'intéresse en imagerie infrarouge à des différences de températures de l'ordre du dixième de degré ;
- d'autre part, les différents capteurs élémentaires n'ont pas la même sensibilité : en effet, pendant l'analyse d'un fond uniforme, les réponses dispersées des capteurs reproduisent les variations intrinsèques des capteurs et constituent un signal comportant un bruit superposé à une composante continue égale à la réponse moyenne.

Dans ces conditions, des défauts d'ordre optique liés à l'optique de collimation de flux, tel que le vignettage ou la distorsion, viennent créer une modulation parasite des défauts intrinsèques aux capteurs.

Pour s'affranchir des défauts liés à l'optique et pour homogénéiser les sensibilités des capteurs et donc supprimer l'influence de cette dispersion des réponses intrinsèques ou gains des capteurs, un principe classique consiste à mettre en mémoire en usine, pour différentes valeurs de fonds moyens :

- des valeurs de dispersion des gains de capteurs puis à soustraire en imagerie courante, et capteur par capteur, les valeurs du signal d'imagerie aux valeurs de référence correspondant au fond moyen
- les corrections correspondant aux défauts liés à l'optique, ces défauts étant généralement connus et précalculables.

La mise en oeuvre de cette mémorisation constitue une calibration fixe permettant la suppression du fond continu, l'acquisition de la valeur de ce fond et la correction apparente des défauts.

La mise en oeuvre de cette méthode impose d'accéder à la connaissance et à l'acquisition d'un flux moyen d'image. Un système de calibration adapté est décrit dans le Journal SPIE volume 782, pages 39-40. D'après cet article, le détecteur reçoit, grâce à un commutateur opto-mécanique adapté, un flux issu d'une source interne fournissant une température apparente de référence, en l'occurrence un corps noir dont la température est ajustée à la température moyenne de la scène observée grâce à une boucle d'asservissement.

Dans ces conditions, les capteurs forment une image sur le corps noir, et reçoivent un flux égal au flux moyen de la scène. Il est alors possible de mémoriser les valeurs du signal vidéo de référence.

Ce système est compliqué puisqu'il conduit à placer dans la caméra un corps noir asservi en température ce qui, notamment quand cette température est beaucoup plus froide que la caméra, pose de nombreux problèmes liés à la condensation sur le corps noir, à la rapidité de réponse de la boucle d'asservissement, au contrôle et à la mesure différentielle de la température, etc... D'autre part, pour garantir une calibration de qualité, il faut non seulement porter le corps noir à température précise, mais encore supprimer les gradients thermiques le long de cette pièce dont l'émissivité doit également être connue et contrôlée. Cette technique conduit finalement à n'effectuer de calibration que très rarement.

La demande de brevet européenne n° EP-A-0549446 publié après la date de priorité de la présente demande présente un dispositif de calibration par défocalisation en basculant un groupe optique de calibration à l'intérieur de la caméra.

La demande de brevet européen n° EP-A-0468474 et la demande française n° FR-A-2673794 présentent des dispositifs permettant une calibration par défocalisation.

La demande de brevet européen n° EP-A-0465060 présente un dispositif à balayage permettant une calibration par défocalisation à l'aide d'un prisme.

La demande de brevet européen n° EP-A-0185592 présente un dispositif de balayage comportant un diasporamètre.

Le Patent abstract de JP-A-3278680 présente un dispositif de calibration par défocalisation permettant d'ajuster la valeur de la luminosité moyenne par translation d'une lentille.

L'invention vise à mettre en oeuvre une caméra dont le dispositif de calibration est plus simple à réaliser et moins délicat et plus efficace dans la mesure ou il permet de réaliser une opération de calibration à volonté.

Afin d'atteindre cet objectif, l'invention propose d'utiliser, en mode calibration, un groupe optique placé devant la caméra et dont les caractéristiques permettent à chaque capteur de « voir » par défocalisation un champ équivalent au champ nominal de la caméra en conservant la valeur de l'étendue géométrique liée à chaque capteur en mode imagerie courante et en mode calibration. Toute caméra possède un diaphragme réel et le groupe optique de calibration agit, en mode calibration, sur l'architecture optique de la caméra avant le diaphragme réel, sans modifier la partie optique située én aval de ce diaphragme. Chaque capteur élémentaire reçoit alors un flux de scène correspondant à la moyenne de l'image, sans altérer la configuration géométrique des faisceaux élémentaires correspondant aux flux de scène reçus par les capteurs.

Dans ces conditions, les flux reçus par les capteurs en mode calibration sont identiques à ce qu'ils reçoivent lorsque la caméra observe en imagerie courante une scène uniforme dont la température apparente reste égale à la température moyenne de l'image. En soustrayant au signal correspondant à l'imagerie courante le signal de référence obtenu par la calibration, selon la méthode classique, les dispersions de gain des capteurs se trouvent alors exactement compensées.

Plus précisément, l'invention concerne un dispositif optique de calibration pour caméra thermique, tel que défini par la revendication 1.

Selon un mode de réalisation particulier, le dispositif de calibration comporte en outre un système déviateur optique pour permettre une calibration sur la partie utile de l'image, cette partie utile dépendant de l'application envisagée. Par exemple, la calibration pourra, à l'aide de ce système déviateur, se faire sur le sol pour un système de reconnaissance air-sol.

La mise en oeuvre du dispositif de calibration selon l'invention est aisée en particulier lorsqu'il est disposé hors de la caméra, sans nécessiter la réalisation délicate de conjugaison pupillaire, ni l'adjonction d'éléments optiques.

Ce dispositif peut s'adapter à la plupart des caméras existantes, en particulier aux caméras grand champ et très grand champ (dit à « fish-eye » en terminologie anglo-saxonne), sans avoir à les modifier.

D'autres avantages et caractéristiques apparaîtront à la lecture de la description qui suit, accompagné des dessins annexés sous forme de figures qui représentent respectivement :

- les figures 1a et 1b, un schéma général simplifié d'une caméra thermique, équipée du dispositif selon l'invention, fonctionnant respectivement en mode imagerie et en mode calibration ;
- la figure 2, un schéma de structure du système optique d'une caméra thermique grand champ en mode imagerie courante ;
- la figure 3, un exemple d'implantation en mode calibration du dispositif selon l'invention sur le système optique précédent ;
- les figures 4 et 5, deux schémas d'architecture optique combinant le système optique d'une caméra thermique et le dispositif optique de calibration selon l'invention, avec représentation schématique des flux captés ;
- les figures 6a et 6b, une variante du dispositif avec déplacement axial d'un groupe optique du système optique de la caméra ;
- les figures 7 à 9, le dispositif de calibration selon l'invention comportant différents types de déviateur optique.

La figure 1a montre schématiquement l'effet du système optique 1 d'une caméra thermique, équipée d'un détecteur 2 à capteurs élémentaires multiples organisés en mosaïque, sur les champs d'observation des capteurs situés en bordure de la mosaïque, tels que C2 et C3, et d'un capteur situé en position centrale sur la mosaïque, tel que C1. Le système optique 1 définit un axe optique AA', qui coïncide avec l'axe de symétrie longitudinal de la caméra, une pupille d'entrée PE et une pupille de sortie PS qui définit un diaphragme d'ouverture pour le détecteur 2. La pupille d'entrée PE peut être réelle, comme illustrée par la figure la, ou virtuelle.

Le système optique 1, de structure connue et non détaillée sur le schéma, projette classiquement sur chaque capteur, par exemple C1, C2 ou C3, une portion de l'espace observé selon une direction propre, respectivement D1, D2 et D3, D1 coïncidant avec l'axe optique AA' du système optique. Ces directions correspondent sur la figure aux rayons lumineux fléchés respectivement une fois, deux fois et trois fois. Le champ total embrassé est mesuré, dans le plan vertical de la figure, par l'angle d'ouverture $2\theta_v$ entre les directions extrêmes $D_2$

et $D_3$.

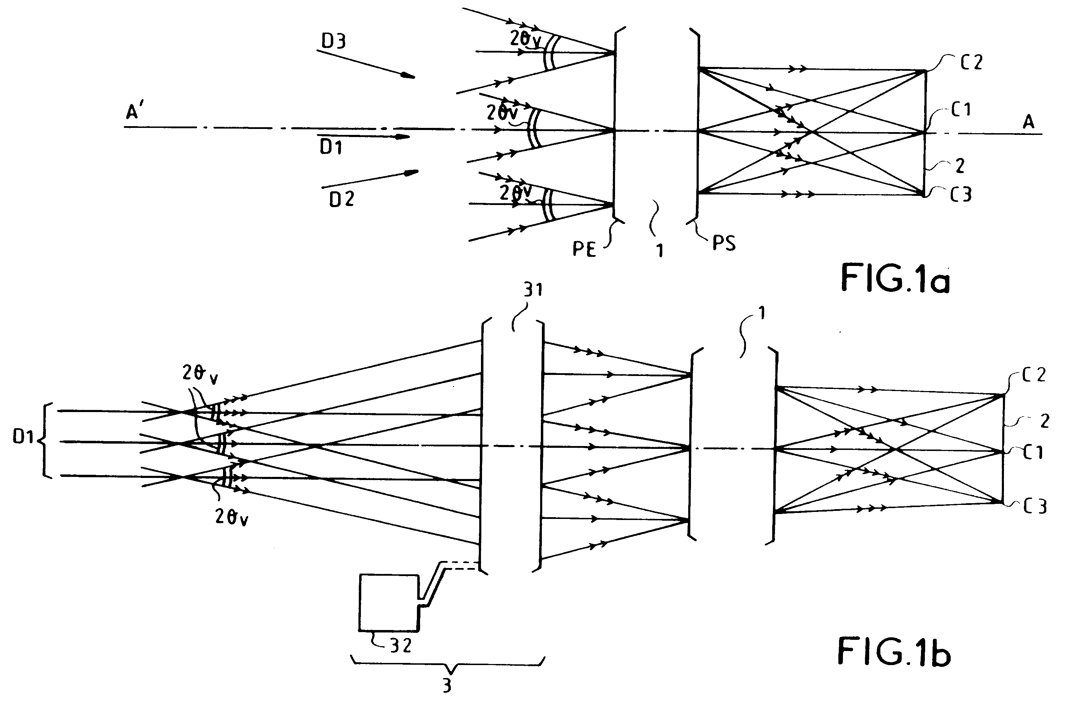

Une opération de calibration selon l'invention est illustrée par la figure 1b qui représente, en plus des éléments de la figure la, un dispositif de calibration 3. Le dispositif 3 comporte un groupe optique 31, composé d'au moins une lentille simple, et d'un système mécanique classique de basculement 32 pour entraîner le groupe 31. Une opération de calibration est déclenchée par basculement du dispositif 31 devant le système optique 1 à l'aide du système mécanique 32.

Les caractéristiques critiques pour mettre en oeuvre l'invention, sont les distance focale F et la position repérée sur l'axe optique AA' du groupe optique 31 :

- La valeur de la distance focale de groupe 31 est conditionnée par l'obtention d'un champ de calibration représentatif de la scène observée soit, si le plan vertical de la figure est choisi, un champ d'observation égal à $2\theta_v$ pour tous les capteurs, par exemple pour les capteurs C1, C2, C3 ; le choix du champ de calibration n'est pas limité au champ vertical et est laissé à l'appréciation de l'Homme de l'Art ;

- La position du groupe optique 31 est conditionnée par l'obtention d'une pupille d'entrée de l'ensemble optique, constitué en mode calibration du groupe 31 et du système optique 1, rejetée à l'infini pour que tous les capteurs visent le même champ dans la même direction ; ceci se traduit sur la figure 1b par la formation de rayons moyens parallèles selon la direction D1 en amont du groupe de calibration 31.

De manière générale, les systèmes optique de caméra thermique comportent un diaphragme d'ouverture matérialisé, par exemple un stop réel, entre une partie optique frontale et une partie optique avale. En supposant que la partie frontale ne provoque pas de vignettage de champ, c'est la partie avale comprise entre le diaphragme réel et le détecteur qui détermine la distribution des étendues géométriques élémentaires sous lesquels les capteur "voient" la scène en mode imagerie, et par là la répartition des flux de scène sur le détecteur.

Pour ne pas compromettre cette répartition, le dispositif de calibration selon l'invention transforme en mode calibration l'architecture optique de la caméra avant le diaphragme réel, c'est-à-dire sans modifier la partie optique avale située après ce diaphragme. De cette façon, l'étendue géométrique $G_S$ reste la même, pour chaque capteur d'étendue S, en mode imagerie courante et en mode calibration. Pour être plus précis, rappelons que le flux $\Phi S$ de scène observé par chaque capteur est lié, si la transmission du système optique est supposée parfaite, à la luminance de la scène $L (T_s)$ dépendant de la température de scène $T_s$ et aux caractéristiques géométriques des flux élémentaires vus par chaque capteur et appelées étendues géométriques $G_S$ par la

relation :

$$\Phi_S = L (T_S) \times G_S$$

$G_S$ se déduit en fait de la valeur de l'angle solide $\Omega_S$ du faisceau utile vu par chaque capteur, en faisant intervenir l'angle $\theta$ entre la normale au capteur et la direction moyenne des faisceaux et la surface S de chaque capteur, par la formule $G_S = S \times \cos\theta \times \Omega_s$.

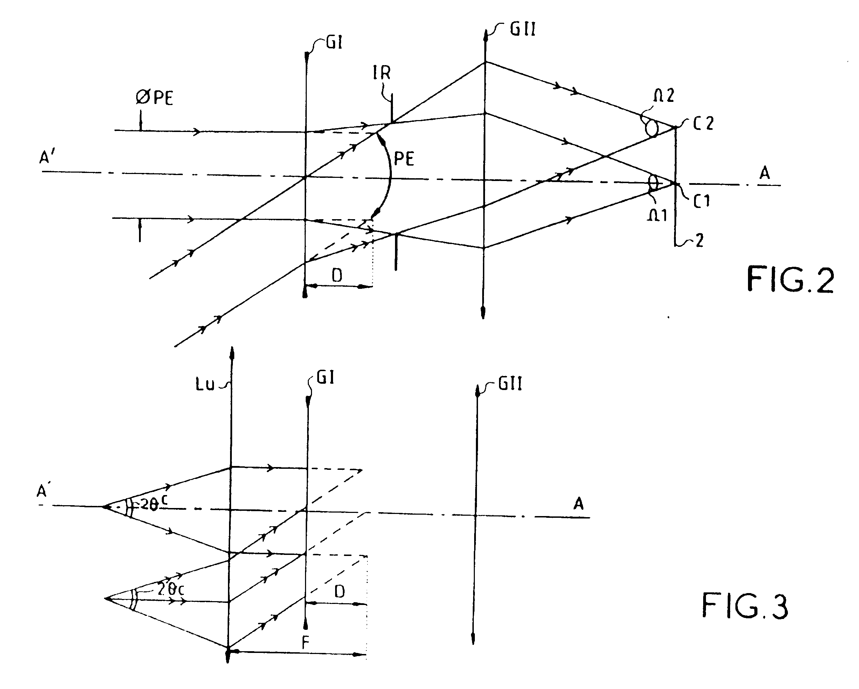

Les figures 2 et 3 illustrent un schéma de structure du système optique d'une caméra thermique grand champ et un exemple d'implantation du dispositif de calibration sur tel système optique.

La plupart des caméras grand champ disponibles sur le marché, et fonctionnant par exemple dans la bande spectrale 3 à 5 µm, rejettent virtuellement la pupille d'entrée PE de la caméra, comme illustré sur la figure 2, à l'intérieur du système optique ; celui-ci comporte habituellement un iris réglable IR faisant office de diaphragme d'ouverture, disposé entre un groupe optique amont GI, symbolisé sur la figure par une lentille divergente et un groupe optique aval GII, symbolisé par une lentille convergente.

Sur la figure 2, ont été également représentés le détecteur 2 et les rayons extrêmes à simple et double flèche des faisceaux captés respectivement par le capteur central C1, situé en position centrale et par le capteur C2, situé en bordure du détecteur. Pour des raisons de clarté, seuls sont représentés, parmi les angles solides $\Omega 1....\Omega n$ sous lesquels les capteurs C1 à Cn voient la scène, les angles solides $\Omega 2$ et $\Omega 1$ des capteurs C2 et C1. La pupille d'entrée PE, matérialisée sur la figure 2 par l'intersection des rayons d'entrée prolongés en pointillé , est l'image conjuguée du diaphragme d'ouverture de la caméra matérialisé par l'iris IR ; son diamètre $\phi PE$ est indiqué sur la figure 2 et sa position est repérée par sa distance D au premier dioptre d'entrée du système optique.

En mode de calibration, représenté par la figure 3, le groupe optique 31, qui peut être constitué par une lentille unique Lu, est basculé devant le groupe amont CI. Le champ de calibration $2\theta C$, pour être représentatif de la scène observée, doit être choisi égal au champ vertical $2\theta_v$ précédemment défini en mode imagerie.

Cette condition fixe alors la distance focale F du groupe optique de calibration, dont la valeur est fournie par :

$$F = \phi PE/2tg\theta_v$$

D'autre part, pour que tous les capteurs voient le même champ dans la même direction en mode calibration, les rayons moyens incidents doivent rester parallèles. Pour qu'il en soit ainsi, le plan de la pupille d'entrée en mode imagerie coïncide avec le plan du foyer image du groupe de calibration : dans ces conditions, la pupille d'entrée de la caméra en mode calibration est bien rejetée à l'infini, et les rayons incidents moyens sont parallèles. La constitution du groupe optique de calibration dépend des valeurs relatives de F et D :

- la position de la pupille d'entrée PE en mode imagerie étant située, en général, à l'intérieur du système optique de la caméra (comme sur la figure 3), il en résulte que F>D et une lentille simple suffit pour constituer l'optique de calibration
- Si F<D, le groupe optique de calibration comprend alors deux lentilles formant deux groupes dissociés, de façon à rejeter suffisamment loin son foyer image.

Un cas particulier intéressant est celui des caméras qui présentent, de manière connue, une pupille de sortie au voisinage de l'écran froid (formant le diaphragme d'ouverture du détecteur dans le cryostat) pour supprimer les flux de structure. La pupille d'entrée de ces caméras étant située très à l'intérieur de son système optique, le groupe optique de calibration se trouve alors proche des lentilles de tête de la caméra, ce qui permet de diminuer ses dimensions et rend son escamotage plus aisé. Le dispositif de calibration selon l'invention est donc parfaitement compatible avec cette classe de caméras.

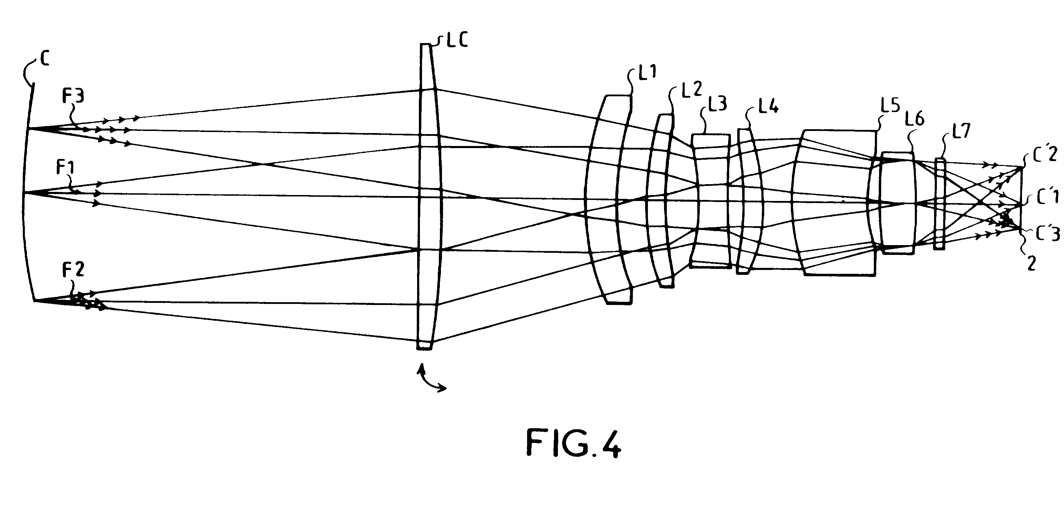

A titre d'exemple, une architecture optique complète de caméra combinant un système optique et un groupe de calibration, est schématisée sur la figure 4. L'architecture comprend un groupe optique d'imagerie, formé des lentilles L1 à L7, et une lentille simple frontale de calibration LC. La figure représente également les flux F1, F2 et F3 captés par trois capteurs C'1, C'2 et C'3 de la mosaïque de détection 2 en mode calibration, limités par les rayons fléchés respectivement une fois, deux fois et trois fois, et le champ couvert par le détecteur 2 schématisé par la courbe C.

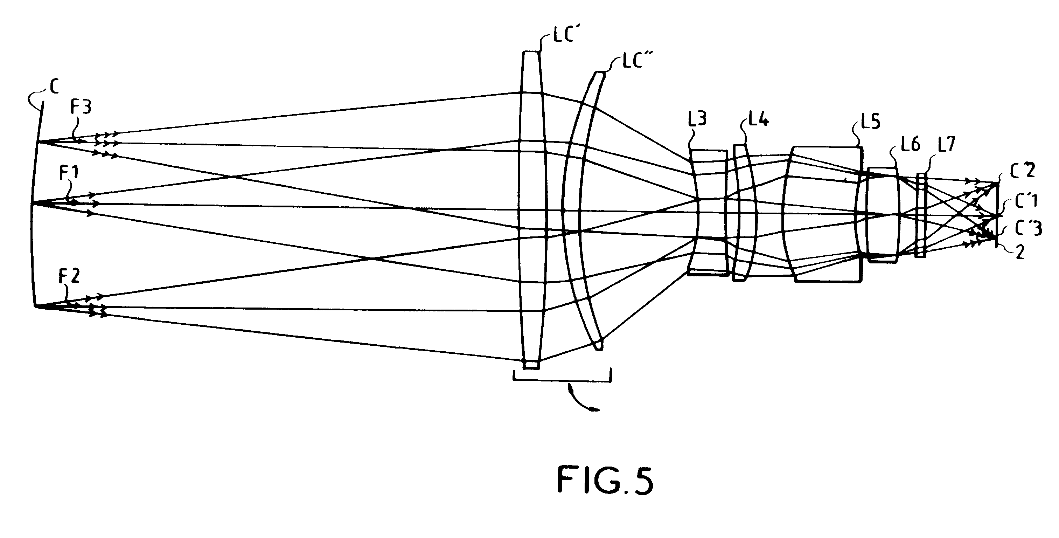

La figure 5 représente une variante du réalisation du groupe précédent, nécessitant lors de la calibration le basculement d'un groupe du système optique de la caméra, en l'occurrence du groupe frontal. Sur la figure 5, le groupe de calibration est formé des lentilles LC' et LC" associées au système optique illustré à la figure 4, les mêmes signes de références indiquant les mêmes éléments. Mais ce système optique est constitué, en mode calibration, des lentilles L3 à L7, le groupe frontal composé seulement des lentilles frontales L1 et L2 ayant été escamoté.

L'invention n'est pas limitée aux exemples de réalisation tels que décrits et illustrés.

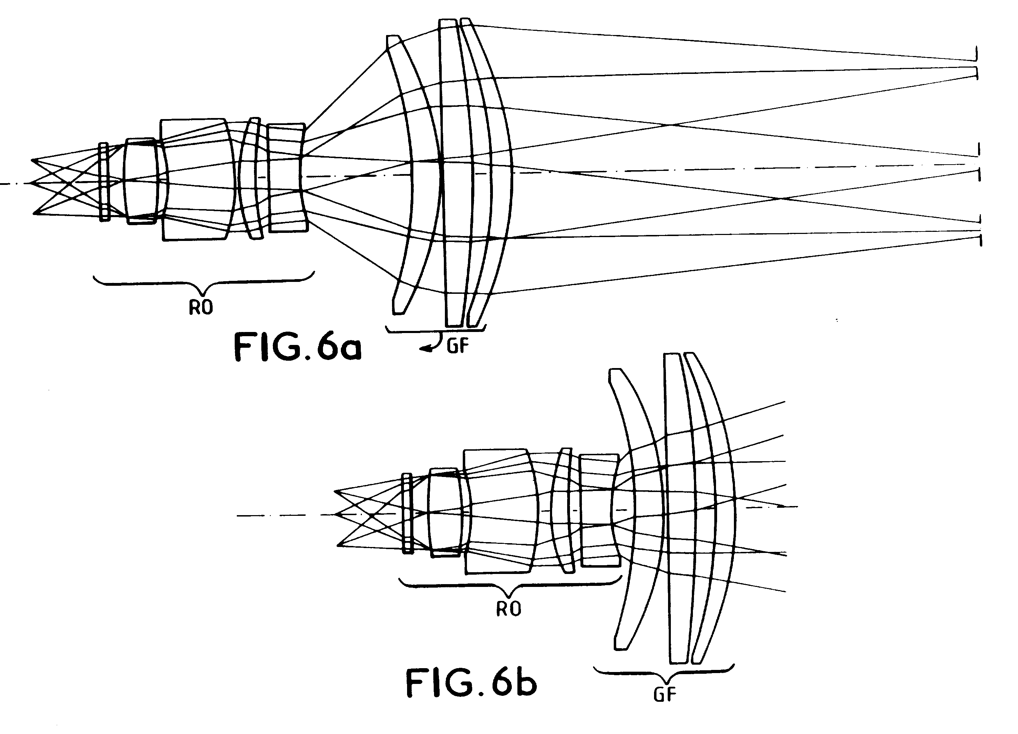

Il est possible dans certains cas, d'obtenir une calibration par déplacement axial d'un groupe de lentilles interne la caméra, du même type que celle obtenue par escamotage d'un groupe interne, tel que celui du groupe frontal illustré à la figure 5. Les figures 6a et 6b illustrent une telle possibilité par déplacement axial, par rapport au reste de système optique RO du groupe frontal GF entre une position de calibration (figure 6a) et une position nominale (figure 6b). Cette possibilité est connue du document EP-A-0 468 474.

Dans les cas où seule une partie de l'image visualisée par la caméra est utile, il est possible d'augmenter l'efficacité de la calibration en utilisant un déviateur optique en combinaison avec un dispositif de calibration. Le déviateur permet de restreindre la calibration sur la zone réellement exploitée de l'image, par exemple le sol dans le cas d'un système d'observation au sol embarqué à bord d'un avion ou d'un hélicoptère et destiné à localiser des cibles terrestres.

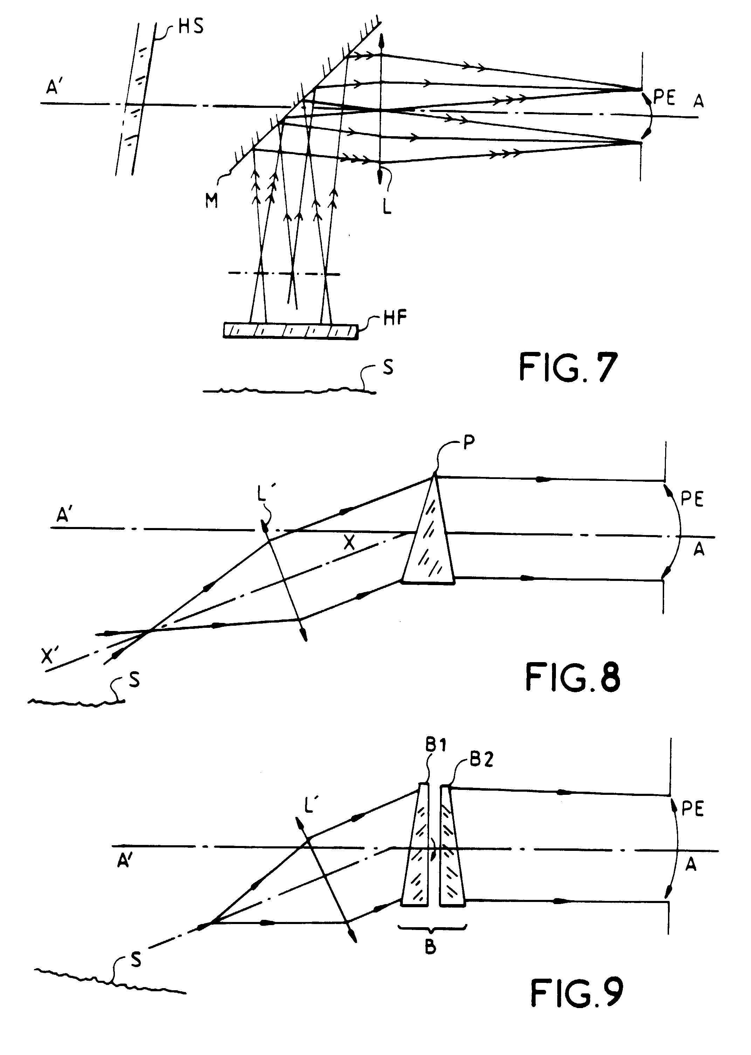

Les figures 7 à 9 représentent un dispositif de calibration selon l'invention comportant respectivement un miroir, un prisme et un diasporamètre comme déviateur optique.

La figure 7 montre la conjugaison optique entre une lentille de calibration L d'un des groupes de calibration précédemment décrits et un miroir M disposé en mode calibration sur l'axe optique AA' avec une inclinaison adaptée permettant de de viser la zone utile de l'image. Les champs de calibration élémentaires de trois capteurs du détecteur (non représentés) sont limités par des rayons fléchés respectivement une fois, deux fois et trois fois.

Les rayons lumineux provenant du sol S pénètrent dans l'espace de calibration après passage à travers un hublot de fermeture HF puis, après rabattement par le miroir M, dans la caméra à travers la pupille d'entrée PE. En mode imagerie, le miroir M et la lentille L basculent de manière à libérer la voie d'imagerie pour analyser le champ d'observation selon l'axe AA' à travers un hublot de sortie HS.

Sur la figure 8, un prisme P est associé en mode calibration à une lentille de calibration L' de façon à obtenir, grâce à une inclinaison de la lentille L', des champs élémentaires de calibration (tel que celui limité par les rayons à simple flèche) provenant du sol S selon l'axe optique XX' de la lentille L'. Les champs élémentaires de calibration pénétrant dans la caméra, après traversée du prisme P, par la pupille d'entrée PE.

La figure 9 reprend les mêmes éléments que ceux de la figure 8 et agencés de la même façon, mais en remplaçant le prisme P par un diasporamètre B, composé de deux prismes B1 et B2, comme déviateur optique. Le diasporamètre B peut constituer également le dispositif de déviation de la ligne de visée de la caméra par rotation des prismes B1 et B2 autour de l'axe AA' et, dans ce cas, il n'est pas escamoté lors du passage en mode imagerie.

## Revendications

1. Dispositif optique de calibration pour caméra thermique comportant un détecteur (2) à capteurs élémentaires multiples, et un système optique (1) définissant un axe optique (A'A), une pupille d'entrée

(PE) et une pupille de sortie (PS), pour former une image de l'espace observé et projeter sur chaque capteur (C1, C2, C3) une portion élémentaire de cet espace selon une direction donnée (D1, D2, D3) en mode imagerie, caractérisé en ce qu'il comporte un groupe optique composé d'au moins une lentille simple (LC) et placé par basculement devant la caméra lors d'une opération de calibration et en ce que la distance focale et la position, mesurée sur l'axe optique (A'A), de ce groupe sont choisies respectivement d'une part pour observer, en mode calibration, à partir de chaque capteur, un champ d'observation de même ouverture (2θ$_v$) que le champ d'observation de la caméra en mode imagerie, et d'autre part pour conférer à ces champs une même direction moyenne (D1) en rejetant la pupille d'entrée (PE) à l'infini pour que les capteurs voient la même scène.

2. Dispositif optique de calibration selon la revendication 1, caractérisé en ce que le groupe optique de calibration est placé hors de la caméra et bascule à l'aide d'un système mécanique (32).

3. Dispositif optique de calibration selon la revendication 1 pour caméra thermique grand champ dont le système optique comporte un iris réglable (IR) comme diaphragme d'ouverture disposé entre un groupe optique amont GI et un groupe optique aval GII, caractérisé en ce que la pupille d'entrée (PE) en mode imagerie se trouve dans le plan du foyer image du groupe de calibration (31) dont la distance focale (F) est donnée par

$$F = \phi PE/2tg\theta_v$$

$\phi PE$ étant le diamètre de la pupille d'entrée et $\theta_v$ étant le demi-angle d'ouverture du champ vertical en mode imagerie.

4. Dispositif optique de calibration selon la revendication 3, caractérisé en ce que le groupe optique de calibration (31) se compose d'une lentille simple (Lu, LC, L,L') lorsque la pupille d'entrée (PE) est située à l'intérieur du système optique (1) de la caméra, et comporte deux lentilles lorsque la distance focale du groupe optique de calibration (31) est inférieur à la distance entre l'entrée du système optique (1) et la pupille d'entrée (PE) en mode imagerie.

5. Dispositif optique de calibration selon l'une des revendications précédentes, caractérisé en ce que le groupe optique de calibration (L, L') est associé optiquement à un déviateur optique (M, P, B) pour restreindre la calibration sur une zone utile (S) de l'image.

6. Dispositif optique de calibration selon la revendication 5, caractérisé en ce que le déviateur optique est un miroir (M) escamoté en mode imagerie disposé sur l'axe optique (AA') du système optique (1) de la caméra avec une inclinaison permettant de viser la zone utile (S).

7. Dispositif optique de calibration selon la revendication 5, caractérisé en ce que le déviateur optique est un prisme (P) escamoté en mode imagerie et disposé sur l'axe optique (AA') entre ledit système optique (1) et le groupe optique de calibration, le groupe optique de calibration (L') étant incliné pour viser la zone utile (S).

8. Dispositif optique de calibration selon la revendication 5, caractérisé en ce que le déviateur optique est un diasporamètre (B) composé de deux prismes (B1, B2) et disposé sur l'axe optique (AA') entre ledit système optique (1) et le groupe optique de calibration, le groupe optique de calibration (L') étant incliné pour viser la zone utile (S).

9. Dispositif selon la revendication 8, caractérisé en ce que le diasporamètre (B) constitue le dispositif de déviation de la ligne de visée de la caméra.

## Patentansprüche

1. Optische Eichvorrichtung für eine Wärmebildkamera mit einem zahlreiche Elementarsonden enthaltenden Detektor (2) und einem eine optische Achse (A-A'), eine Eintrittspupille (PE) und eine Austrittspupille (PA) definierenden optischen System (1), um ein Bild des beobachteten Raums zu erzeugen und auf jede Sonde (C1, C2, C3) einen elementaren Teilbereich dieses Raums gemäß einer gegebenen Richtung (D1, D2, D3) im Abbildungsmodus zu projizieren, dadurch gekennzeichnet, daß sie eine optische Einheit enthält, die aus mindestens einer einfachen Linse (LC) besteht und durch Schwenken bei einer Eichoperation vor die Kamera gebracht wird, und daß die Brennweite und die Lage dieser Einheit, gemessen auf der optischen Achse (A-A') dieser Einheit so gewählt sind, daß einerseits im Eichmodus ausgehend von jeder Sonde ein Beobachtungsfeld gleichen öffnungswinkels (2θ$_v$) wie das Beobachtungsfeld der Kamera im Abbildungsmodus beobachtet wird und daß andrerseits diesen Feldern eine gleiche mittlere Richtung (D1) verliehen wird, indem die Eintrittspupille (PE) ins Unendliche verlegt wird, damit die Sonden die gleiche Szene sehen.

2. Optische Eichvorrichtung nach Anspruch 1, dadurch gekennzeichnet, daß die optische Eicheinheit außerhalb der Kamera liegt und mithilfe eines mechanischen Systems (32) schwenkt.

3. Optische Eichvorrichtung nach Anspruch 1 für eine Weitwinkel-Wärmebildkamera, deren optisches System eine regelbare Blende (IR) als Blendenöffnung aufweist, die zwischen einer vorderen optischen Einheit GI und einer hinteren optischen Einheit (GII) liegt, dadurch gekennzeichnet, daß die Eintrittspupille (PE) im Abbildungsmodus sich in der Bildbrennebene der Eicheinheit (31) befindet, deren Brennweite (F) durch folgende Formel gegeben ist: $F = \phi PE/2tg\theta_v$, wobei $\phi PE$ der Durchmesser der Eintrittspupille und $\theta_v$ der halbe Öffnungswinkel des vertikalen Felds im Abbildungsmodus ist.

4. Optische Eichvorrichtung nach Anspruch 3, dadurch gekennzeichnet, daß die optische Eicheinheit (31) aus einer einfachen Linse (Lu, LC, L, L') besteht, wenn die Eintrittspupille (PE) innerhalb des optischen Systems (1) der Kamera liegt, aber zwei Linsen enthält, wenn die Brennweite der optischen Eicheinheit (31) kleiner als der Abstand zwischen dem Eingang des optischen Systems (1) und der Eintrittspupille (PE) im Abbildungsmodus ist.

5. Optische Eichvorrichtung nach einem der vorstehenden Ansprüche, dadurch gekennzeichnet, daß die optische Eicheinheit (L, L') optisch mit einem optischen Ablenkorgan (M, P, B) kombiniert ist, um die Eichung auf eine Nutzzone (S) des Bilds zu beschränken.

6. Optische Eichvorrichtung nach Anspruch 5, dadurch gekennzeichnet, daß das optische Ablenkorgan ein Spiegel (M) ist, der im Abbildungsmodus weggeschwenkt ist und auf die optische Achse (A-A') des optischen Systems (1) der Kamera mit einer Neigung gebracht wird, die die Nutzzone (S) zu erfassen erlaubt.

7. Optische Eichvorrichtung nach Anspruch 5, dadurch gekennzeichnet, daß das optische Ablenkorgan ein Prisma (P) ist, das im Abbildungsmodus weggeschwenkt ist und auf die optische Achse (A-A') zwischen dem optischen System (1) und der optischen Eicheinheit gebracht wird, wobei die optische Eicheinheit (L') so geneigt ist, daß die Nutzzone (S) erfaßt wird.

8. Optische Eichvorrichtung nach Anspruch 5, dadurch gekennzeichnet, daß das optische Ablenkorgan ein Diaspormeter (B) mit zwei Prismen (B1, B2) ist und auf die optische Achse (A-A') zwischen dem optischen System (1) und der optischen Eicheinheit gebracht wird, wobei die optische Eicheinheit (L') so geneigt ist, daß die Nutzzone (S) erfaßt wird.

9. Vorrichtung nach Anspruch 8, dadurch gekennzeichnet, daß das Diaspormeter (B) die Ablenkvorrichtung für die Visierlinie der Kamera bildet.

**Claims**

1. Optical calibration device for a thermal imager, comprising a detector (2) having multiple elementary sensors, and an optical system (1) defining an optical axis (A'A), an entrance pupil (PE) and an exit pupil (PS), in order to form an image of the observed space and to project onto each sensor (C1, C2, C3) an elementary portion of this space in a given direction (D1, D2, D3) in imaging mode, characterized in that it includes an optical combination composed of at least one simple lens (LC) and placed, by tilting, in front of the imager during a calibration operation and in that the focal length and the position, measured along the optical axis (A'A), of this combination are chosen respectively, on the one hand, in order to observe, in calibration mode, by means of each sensor, a field of view of the same aperture ($2\theta_v$) as the field of view of the imager in imaging mode and, on the other hand, to confer on these fields the same mean direction (D1) by rejecting the entrance pupil (PE) to infinity in order for the sensors to see the same scene.

2. Optical calibration device according to Claim 1, characterized in that the optical calibration combination is placed outside the imager and tilts by means of a mechanical system (32).

3. Optical calibration device according to Claim 1 for a wide-angle thermal imager whose optical system includes an adjustable iris (IR) as aperture diaphragm placed between an upstream optical combination GI and a downstream optical combination GII, characterized in that the entrance pupil (PE) in imaging mode lies in the plane of the image focus of the calibration combination (31) whose focal length (F) is given by

$$F = \phi PE/2tan\theta_v$$

$\phi PE$ being the diameter of the entrance pupil and $\theta_v$ being the aperture half-angle of the vertical field in imaging mode.

4. Optical calibration device according to Claim 3, characterized in that the optical calibration combination (31) is composed of a simple lens (Lu, LC, L, L'), when the entrance pupil (PE) lies inside the optical system (1) of the imager, and comprises two lenses when the focal length of the optical calibration combination (31) is less than the distance between the entrance of the optical system (1) and the entrance pupil (PE) in imaging mode.

5. Optical calibration device according to one of the preceding claims, characterized in that the optical calibration combination (L, L') is optically coupled to an optical deviator (M, P, B) in order to restrict the calibration to a working area (S) of the image.

6. Optical calibration device according to Claim 5, characterized in that the optical deviator is a mirror (M) retracted in imaging mode and placed on the optical axis (AA') of the optical system (1) of the imager with an inclination allowing the working area (S) to be targeted.

7. Optical calibration device according to Claim 5, characterized in that the optical deviator is a prism (P) retracted in imaging mode and placed on the optical axis (AA') between the said optical system (1) and the optical calibration combination, the optical calibration combination (L') being inclined in order to target the working area (S).

8. Optical calibration device according to Claim 5, characterized in that the optical deviator is a diasporometer (B) composed of two prisms (B1, B2) and placed on the optical axis (AA') between the said optical system (1) and the optical calibration combination, the optical calibration combination (L') being inclined in order to target the working area (S).

9. Device according to Claim 8, characterized in that the diasporometer (B) constitutes the device for causing the deviation of the line of sight of the imager.

**FIG.1a**

**FIG.1b**

FIG.2

FIG.3

EP 0 610 635 B1

FIG.4

FIG.5

FIG.6a

FIG.6b

FIG.7

FIG.8

FIG.9

14